# FASCICULE DE BREVET EUROPEEN

(11) **EP 0 615 196 B1**
(45) Date de publication et mention de la délivrance du brevet: **11.11.1998**
(21) Numéro de dépôt: 94400518.0
(22) Date de dépôt: 09.03.1994
(51) Int. Cl.: G06F 15/16

(54) **Dispositif de communication entre au moins un client et au moins un serveur, utilisation du dispositif**
Kommunikationvorrichtung zwischen mindestens einem Kunden und mindestens einem Anbieter, Anwendung der Vorrichtung
Communication device between at least one client and at least one server, use of the device

(30) Priorité: 12.03.1993 FR 9302903
(43) Date de publication de la demande: 14.09.1994
(73) Titulaire: BULL S.A., 78434 Louveciennes (FR)
(72) Inventeur: Li, Jianzhong, F-92290 Chatenay-Malabry (FR); Brunon, Jean-Philippe, F-75018 Paris (FR)
(74) Mandataire: Debay, Yves

(56) Documents cités:
- EP-A- 0 205 946
- EP-A- 0 471 090
- IBM TECHNICAL DISCLOSURE BULLETIN. vol. 32, no. 11 , 11 Avril 1990 , NEW YORK US pages 370 - 372 'Routing of incoming calls in a X.25 system'

## Description

La présente invention concerne un dispositif routeur entre un client et un serveur et l'utilisation du dispositif.

Dans une architecture distribuée mettant en relation des stations de travail de type micro-ordinateurs ou ordinateurs personnel (PC) avec un ordinateur central (hôte) par exemple du type UNIX, les processus exécutés sur l'ordinateur (hôte) peuvent être classifiés, en processus serveur et client. Les serveurs permettent l'accès aux données de l'ordinateur hôte et attendent une requête venant d'un client, la traitent et transmettent la réponse. Les clients envoient une requête à un serveur et attendent la réponse, ils peuvent être du type client local, implanté sur l'ordinateur hôte, ou client éloigné communicant par des démons (DAEMON) avec l'ordinateur hôte.

Dans de tels dispositifs, lorsqu 'un client appartenant à un PC émet une requête à destination du serveur, soit le PC attend la réponse et ne fait rien d'autre, soit l'architecture est conçu pour permettre au PC d'accéder à un autre serveur pendant le temps d'attente de la réponse du premier serveur, et dans ce cas, il est nécessaire qu'un lien physique soit établi avec le deuxième serveur. Dans une telle hypothèse, le constructeur doit prévoir des liens physiques nombreux. Par ailleurs, si un autre client sur une autre station veut accéder au même serveur que celui qui est utilisé par le premier client, il ne pourra le faire qu'après que le serveur ait fourni sa réponse au premier client et à la condition que le deuxième client soit relié au premier serveur. Les dispositifs à liaison unique ne permettent donc pas une utilisation optimale de la machine et les dispositifs à liaisons multiples nécessitent un nombre de liaison important.

Un premier but de l'invention est de proposer un dispositif permettant à plusieurs serveurs de dialoguer avec plusieurs clients.

Ce but est atteint par le fait que le dispositif de communication entre au moins un client et au moins un serveur qui échange des messages comporte un routeur qui aiguille les messages entre au moins un client et au moins un serveur à l'aide de trois catégories de files d'attente de messages,
. une file d'attente attribuée au routeur assurant le stockage des messages des clients ou serveurs ;
. une file d'attente attribuée à chaque serveur permettant la lecture des messages de demandes formulées au serveur ;
. Une file d'attente attribuée à chaque client permettant la lecture des messages de réponse.

Selon une autre particularité, le client génère un identifieur de message pour le routeur.

Selon une autre particularité, le routeur génère un identifieur de message pour le serveur et le client.

Selon une autre particularité, le serveur génère un identifieur de message pour le routeur.

Selon une autre particularité, le message comporte un champ de deux octets indiquant si la communication est synchrone ou asynchrone et un champ de deux octets pour indiquer si le message est une réponse ou une demande en donnant respectivement à ce champ la valeur zéro ou une valeur différente de zéro.

Selon une autre particularité, le message comporte un champ de quatre octets d'identification de l'utilisateur émetteur du message.

Selon une autre particularité, le message comporte un champ de quatre octets d'identification du destinataire du message.

Un autre but de l'invention est de proposer un procédé de traitement des requêtes synchrones mises en oeuvre par le dispositif.

Ce but est atteint par le fait que le procédé de traitement des requêtes synchrones entre au moins un client et au moins un serveur dialoguant à travers un dispositif routeur est caractérisé en ce qu'il comporte les étapes suivantes :
. le client envoie un message de requête à la file du routeur ;
. le routeur envoie à la file du serveur un message avec un identifieur;
. après réception de la réponse dans sa file, le routeur envoie un message d'acquittement au client avec un identifieur lui permettant de retrouver la réponse dans la file du routeur.

Selon une autre particularité, le client est lui-même un serveur.

Selon une autre particularité, le serveur est un client d'un autre serveur dans un procédé synchrone ou asynchrone.

Selon une autre particularité, le message comporte un champ de deux octets indiquant si la communication est synchrone ;
et un champ de deux octets pour indiquer si le message est une réponse ou une demande.

Selon une autre particularité, le message comporte un champ de quatre octets d'identification de l'émetteur du message.

Selon une autre particularité, le message comporte un champ de quatre octets d'identification du destinataire du message.

Un autre but de l'invention est de proposer un procédé de traitement des requêtes asynchrones utilisant le dispositif.

Selon ce but, le procédé de traitement des requêtes asynchrones entre au moins un client et un serveur dialoguant à travers un dispositif routeur est caractérisé en ce qu'il comporte les étapes suivantes :
. le client envoie un message de requête à la file d'attente du routeur avec un premier identifieur;
. le routeur envoie à la file d'attente du serveur un message avec un second identifieur, accuse réception au client du message de requête et le serveur accuse réception au routeur en envoyant à la file d'attente routeur le second identifieur ;
. lorsque le serveur a élaboré la réponse, il envoie à la file d'attente du routeur un message avec le second identifieur.

Selon une autre particularité, lorsque le serveur a envoyé un identifieur, et le message de réponse à la file d'attente du routeur, le routeur envoie le message à la file d'attente de serveur de boites de message qui acquitte le routeur, lequel acquitte le serveur.

Selon une autre particularité, le client récupère la réponse en envoyant un message (fetch-message) de demande, à la file d'attente du routeur qui transmet ce message à la file d'attente du serveur de la boite de message, le serveur de la boite de message envoyant la réponse à la file d'attente du routeur qui retransmet au client le message.

Selon une autre particularité, le client envoie un message de requête à la file d'attente du routeur, ce dernier compare la valeur de l'identifieur de message à la valeur -1 pour soit calculer un nouvel identifieur (second identifieur) de message qui servira dans les autres étapes si la valeur était -1, soit retransmettre l'identifieur reçu si la valeur est différente de -1.

Selon une autre particularité, le message comporte un champ de deux octets indiquant si la communication est synchrone ou asynchrone et un champ de deux octets pour indiquer si le message est une réponse ou une demande.

Selon une autre particularité, le message comporte un champ de quatre octets pour identification de l'émetteur du message.

Selon une autre particularité, le message comporte un champ de quatre octets d'identification du destinataire du message.

D'autres caractéristiques et avantages de la présente invention apparaitront plus clairement à la lecture de la description ci-après faite en référence aux dessins annexés dans lesquels :
La figure 1 représente une vue schématique du dispositif de l'invention permettant la mise en oeuvre du procédé ;
La figure 2 représente une vue schématique explicitant une première variante de la mise en oeuvre du procédé ;
Les figures 3A, 3B, 3C représentent une vue schématique d'une autre variante de mise en oeuvre du procédé ;
La figure 4 représente une vue schématique d'un système de traitement transactionnel utilisant le dispositif et le procédé de l'invention.

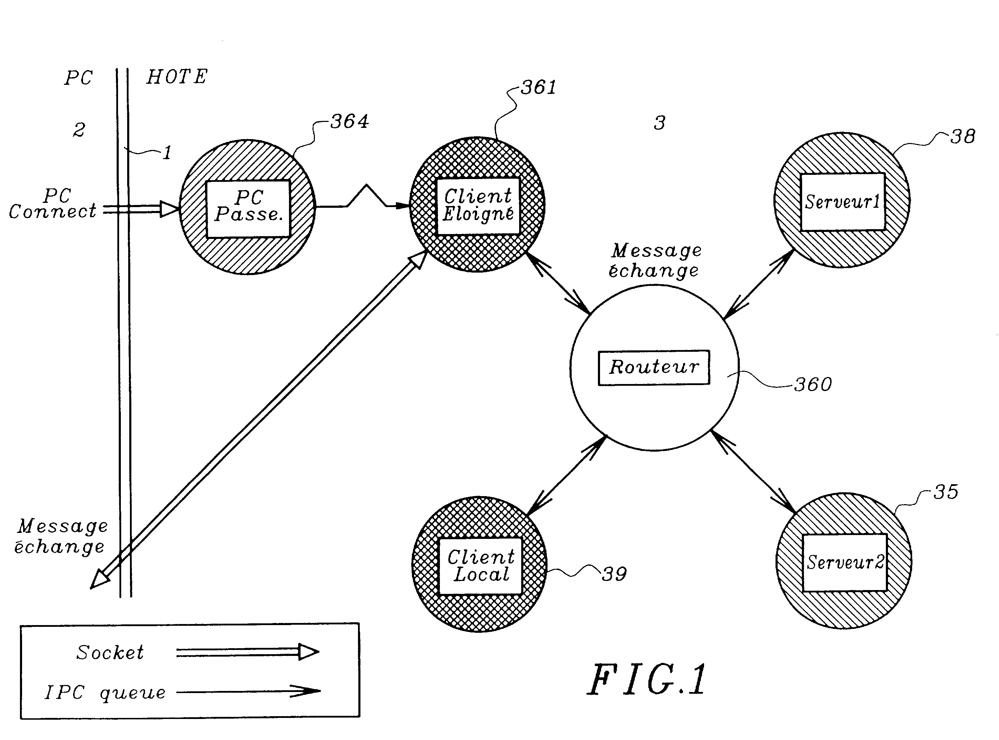

Le dispositif de routage selon l'invention est représenté à la figure 1, et permet de mettre en communication des stations de travail (2) telles que par exemple des PC, avec un ordinateur hôte par exemple de type UNIX par une liaison de communication (1).

L'ordinateur hôte 3 communique avec un ou plusieurs PC à travers une passerelle (364) (PC-bridge) dédiée chacune à un PC. Il y a donc autant de passerelles que de PC. Cette passerelle génère sur l'ordinateur hôte (3) un processus client éloigné (361) par le biais d'une primitive "fork". Cette communication est basée sur les fonctions de connexion, déconnexion, envoi, réception (connect, disconnect, send, receive).

Le dispositif peut également comprendre des clients locaux (39) qui envoient des requêtes à un ou plusieurs serveurs et attendent la réponse des serveurs. Ces clients locaux (39) sont des processus lancés par l'ordinateur hôte (3) par opposition aux clients éloignés (361) qui sont des processus initialisés par une station de travail (2) et créés sur l'ordinateur hôte (3). Les serveurs (38, 35) permettent l'accès aux données de l'ordinateur et attendent les requêtes venant des clients. Les serveurs traitent ces requêtes et envoient la réponse au client en passant à travers un routeur (360) qui est le coeur du système de message et dont le rôle principal est d'aiguiller les messages des clients vers les serveurs et vice-versa.

Le routeur (360) n'a pas besoin de connaître le contenu du message ou son type, mais seulement son origine et sa destination. L'avantage du routeur (360) est de simplifier et généraliser la notion de cession (connexion), d'assurer que les requêtes asynchrones sont envoyées au destinataire, de faciliter la génération des identifieurs de messages évitant ainsi l'utilisation de sémaphores et de permettre ainsi la constitution d'un système d'administration de bas niveau flexible et puissant.

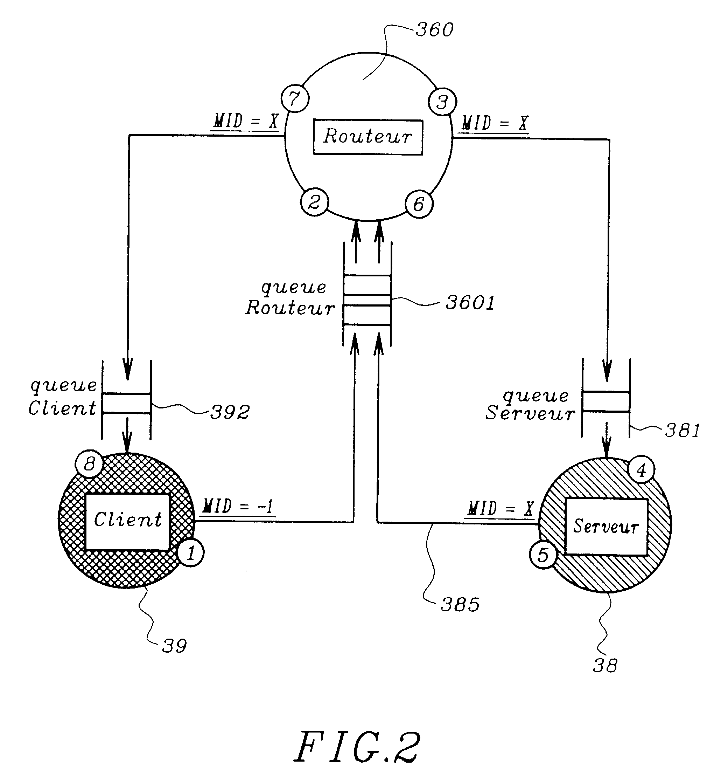

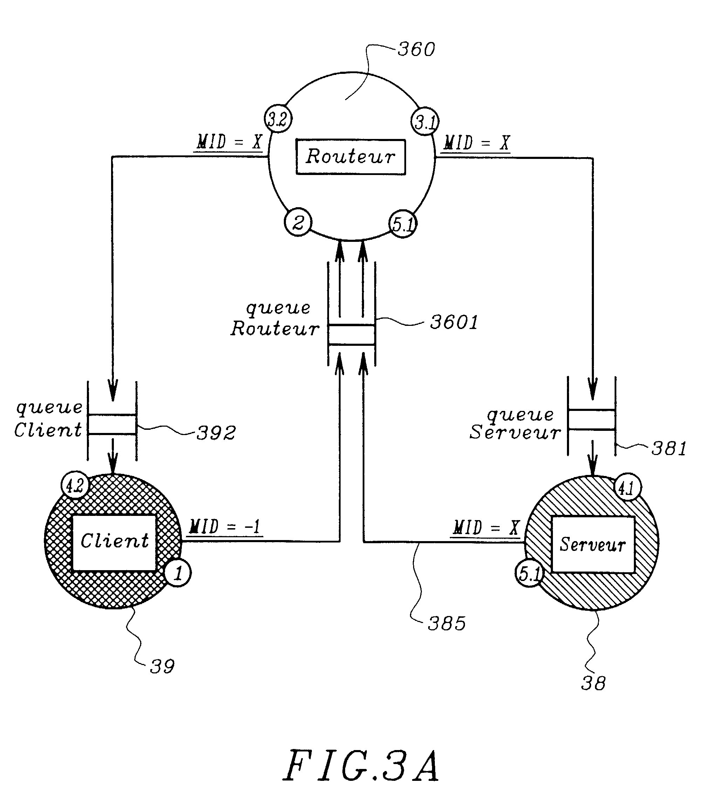

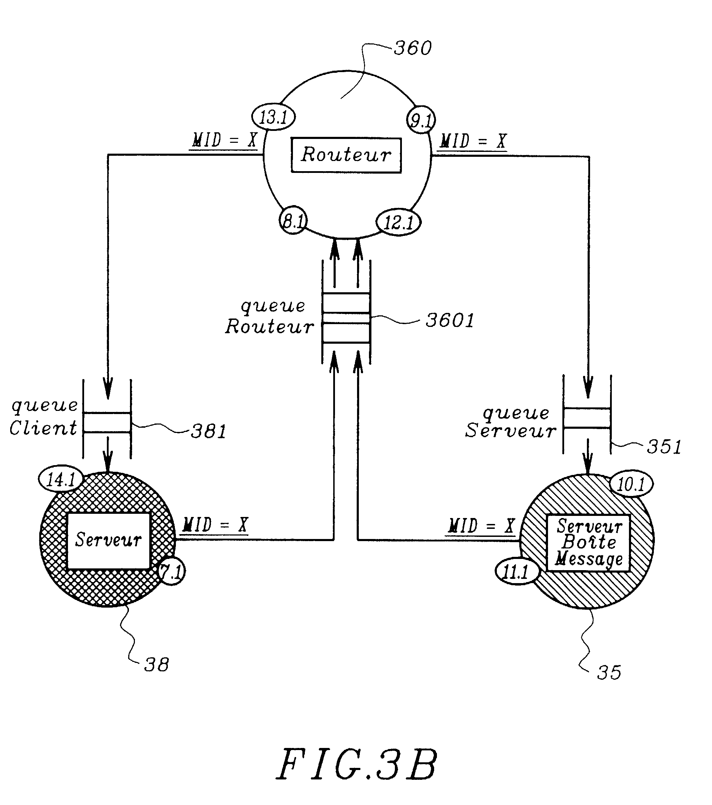

Sur l'ordinateur central (3), les messages entre les processus sont échangés par l'utilisation des files d'attente de message de communication interprocessus. Le dispositif de la figure 1 peut mettre en oeuvre soit un processus de traitement de requête synchrone représenté à la figure 2, soit un processus de traitement de requête asynchrone représenté aux figures 3A à 3C utilisant les files d'attente.

Les messages échangés au cours des communications ont la structure représentée à l'annexe 1 et comportent un premier champ d'identification du message (Messageld) formé de quatre octets, un deuxième champ (sessionld) d'identification de la session du client inscrit à la connexion par le routeur comportant quatre octets, un troisième champ (srvSessionld) d'identification de la session du serveur inscrit à la connexion par le routeur et comportant quatre octets, un quatrième champ (isRequest) de deux octets pour indiquer si le message est une requête ou une réponse, un cinquième champ (synchronous) de deux octets pour indiquer s'il s'agit d'une procédure d'échange synchrone ou asynchrone, un sixième champ (type) pour indiquer s'il s'agit d'une requête ou d'une réponse, ce champ étant formé de quatre octets, un septième champ (priority) de quatre octets, pour indiquer le degré de priorité de la requête, un huitième champ (status) de quatre octets pour indiquer l'état par un code de retour qui est 0 s'il n'y a pas d'erreur, un neuvième champ (senderUserld) d'identification de l'émetteur du message formé de quatre octets, un dixième champ (destUserld) formé de quatre octet d'identification du destinataire du message, un onzième champ (tWFfileName) comportant le nom du fichier indiqué sur 128 octets et une partie administrative comportant sur douze octets la date de création (tWFdate), sur quatre octets, le temps de processeur central utilisé par la requête (cpuTime), sur quatre autres octets, le temps réel nécessité pour la requête (realTime), une partie spécifique à l'application, qui peut être éventuellement supprimée est constituée de quatre octets pour transmettre les données de niveau très spécial et une partie inutilisée constituée de quatre octets pour des usages futurs. Le message dans sa totalité est constitué de 256 octets.

Dans une procédure d'échange synchrone, le client dans une première étape envoie le message dans la file d'attente (3601) du routeur (360), qui comme figuré à l'annexe 2A, regarde si l'identificateur du message à la valeur "-1", ce qui signifie dans ce cas là que le client est en train d'émettre pour la première fois une requête. Dans ce cas, le routeur (360) calcule un nouvel identifieur de message comme indiqué à la ligne 3603 de l'annexe 2A. Ensuite le routeur regarde si le message est une requête en comparant la valeur "0" au contenu du champ correspondant dans le message, si le champ a la valeur "0" c'est une réponse, dans le cas contraire si la valeur est positive ou négative, il s'agit d'une requête, comme indiqué à la ligne 3604, annexe 2A ou 2B. Ensuite il regarde le champ concernant l'identification de l'utilisateur destinataire (ligne 3605 annexe 2A) . Connaissant ces informations, le routeur émet à destination de la queue (381) du serveur (38) qui est le destinataire indiqué dans le message, le message avec un nouvel identifieur X qu'il a calculé, ligne 3606, annexe 2B. Lorsque le serveur (38) a élaboré la réponse, il émet le message (385) avec l'identifieur X à destination de la file d'attente (3601) du routeur (360) qui dès réception du message transmet celui-ci avec l'identifieur X à la file d'attente (392) du client (39). Ceci correspond aux étapes 3608, 3610 de l'annexe 2B.

Dans le cas où la requête est asynchrone, la séquence des échanges entre le client (39), la file d'attente (3601) du routeur, la file d'attente (381) du serveur (38) et la file d'attente (392) du client différente par le fait que le serveur (38) envoie simplement un accusé de réception avec le numéro d'identification à la file d'attente du routeur 3601 et le routeur (360) envoie en même temps qu'il envoie le message au serveur (38) avec son identifieur X, le même identifieur X à la file d'attente (392) du client (39). La succession des étapes est représentée à la figure 3A.

Lorsque le serveur (38) a reçu la question, celui-ci devient lui-même client de la boite à messages (35) dans le cas où une réponse est nécessaire au message du client. Dans ce cas, le serveur (38) envoie un message avec comme identifieur X une valeur différente de "-1" vers la file d'attente (3601) du routeur. Lorsque le routeur (360) traite le message de cette file d'attente, il constate que l'identifieur de message est différent de "-1" et ne le modifie pas. Le routeur (360) envoie directement le message en direction de la file d'attente 351 associée au serveur de boite de messages (35). Le serveur de boite de message (35) envoie un acquittement avec l'identifieur du message à la file d'attente (3601) du routeur (360) qui transmet l'acquittement à la file d'attente (381) du client qui est dans ce cas la file d'attente (381) du serveur (38). Cette étape correspond à l'étape 3612 de l'annexe 2B dans laquelle le routeur effectue l'acquittement pour le client que celui-ci soit un client normal ou un serveur.

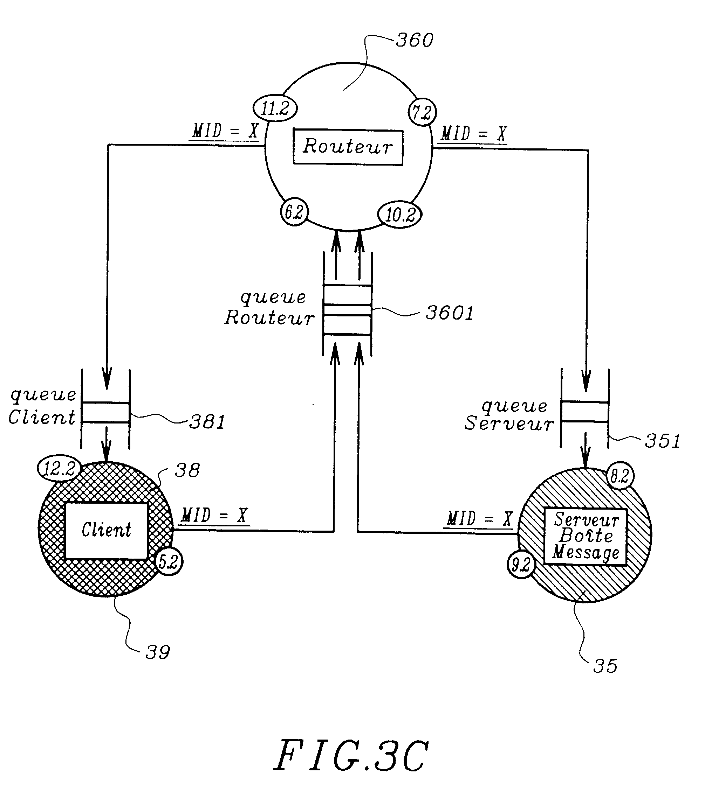

La figure 3C représente le processus lorsque le client (39) veut récupérer la réponse en envoyant un message de requête avec un identifieur X vers le serveur de boites de messages sous la forme d'un ordre (fetch-message) pour lire les messages du serveur de la boite de message(35). Le message envoyé par le client (38) est stocké à l'étape 6.2 dans la file d'attente (3601) du routeur qui lui à l'étape 7.2 envoie le message vers la file d'attente (351) du serveur de boite de message (35). Le serveur de boites de message envoie la réponse a l'étape 9.2 vers la file d'attente (3601) du routeur qui à l'étape 10.2 traite ce message et l'envoie à l'étape 11.2 vers la file d'attente (381) du client (38).

L'annexe 3C représente le fonctionnement d'un serveur qui à la première étape 3810 reçoit une requête sous forme de message, à la deuxième étape 3811 traite la requête en effectuant la déclaration des paramètres en entrée et en sortie, en retrouvant à l'étape 3812 les paramètres d'entrée dans le message, en appelant à l'étape 3813 le serveur d'interface de programmation de l'application et en stockant à l'étape 3814 les paramètres de sortie dans le message. Lorsque la requête a été traitée, si une réponse synchrone est demandée comme représentée à l'étape 3815, le serveur envoie alors la réponse après avoir vérifier que les bits du champ indiquant si la réponse doit être synchrone qu'il valait la valeur 0.

A l'étape 3816, si après vérification de la valeur des bits du champ synchrone, le serveur constate que la réponse est asynchrone, il vérifie le champ (is-request) pour regarder s'il faut une réponse. Si la valeur est également 0, cela indique que le routeur et le client attendent une réponse et dans ce cas, le serveur inscrit le message dans sa file d'attente et à l'étape suivante envoie un accusé de réception au routeur.

Le dispositif ainsi conçu et le procédé mis en oeuvre permettent d'éviter de dupliquer les serveurs pour permettre l'accès par plusieurs clients et permettent également d'éviter de dupliquer les liaisons entre plusieurs serveurs et un même client, pour permettre au client d'accéder aux différents serveurs.

Enfin, le procédé permet par le fait qu'il est équilibré et qu'il comporte trois queues de messages, de savoir dans le cas où il y a un blocage, pour quelle raison le blocage s'est effectué.

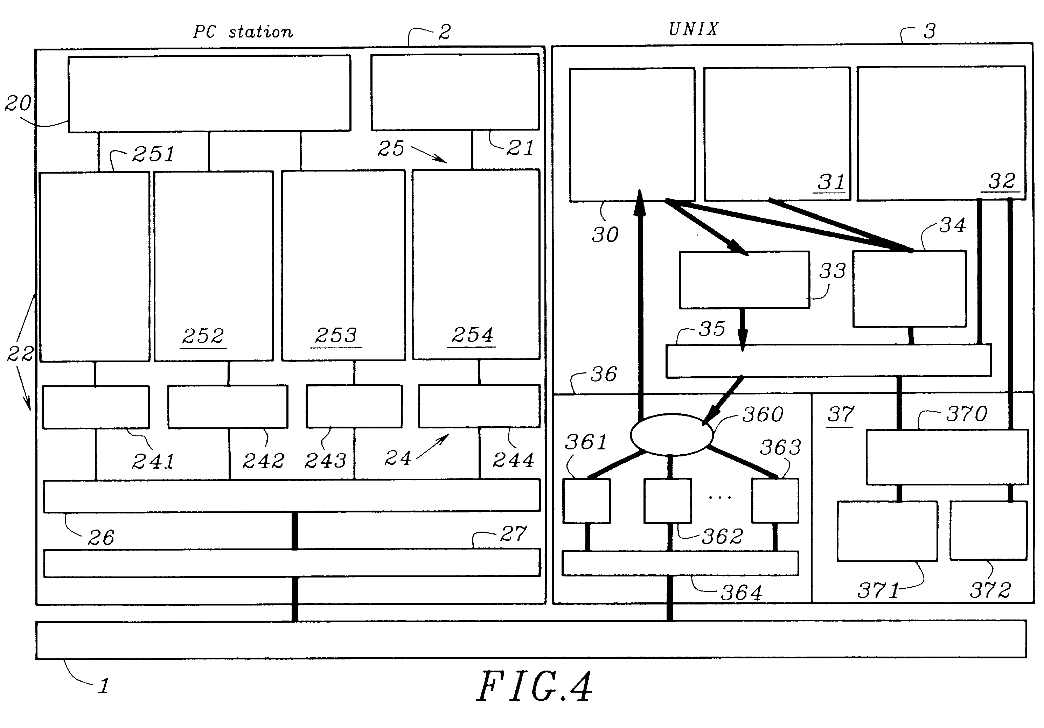

Une utilisation particulièrement avantageuse de l'invention peut être faite dans un système de traitement transactionnel entre un serveur informatique et une pluralité de stations de travail tel que représentée à la figure 4.

La figure 4 représente un système de traitement transactionnel entre un serveur informatique (3) utilisant des données de traitement stockées sur une base de données relationnelle d'un serveur informatique (3), par exemple du type "UNIX", et communiquant avec des stations de travail (1), par exemple du type PC, sur lesquelles le travail d'une application qui se déroule dans le cadre d'activités est exécutée par l'utilisateur de la station de travail.

Le serveur (3) comporte un jeu de modules (30 à 37) qui initialisent et coordonnent les activités. Par activité on doit entendre le corps d'une étape de travail, d'une procédure, c'est à dire une unité de base de travail qui doit être un jeu séquentiel d'actions primitives exécutées par un seul acteur.

Le système de traitement transactionnel aide à définir, exécuter, coordonner et commander le flux de travail entre les organisations ou les groupes de travail en se basant sur une description des tâches de bureau qui peuvent être décrites comme des tâches structurées récurrentes, appelées procédures dont les éléments de travail de base sont appelés activités et doivent être exécutées par différents individus appelés acteurs selon une certaine séquence.

Un acteur consiste en une identification unique de l'acteur (usrid) fournie par le système, un nom d'acteur (name), un prénom de l'acteur (firstName), un mot unique d'ouverture de session (loginName), un mot de passe (password) et une étiquette (alias).

Une procédure est un jeu prédéfini d'étapes de travaux selon un séquencement partiel de ces étapes. Une étape de travail est formée d'une en-tête (identification, précédence,etc...) et d'un corps (activité) qui constitue le travail actuel à exécuter. Différentes étapes d'une procédure peuvent être exécutées par différentes personnes, différents groupes de personnes. Dans certains cas, plusieurs étapes d'une procédure peuvent être exécutées en même temps ou dans un ordre quelconque. En général, une procédure est un jeu partiellement ordonné d'étapes, c'est à dire dans lequel toutes les étapes ne doivent pas être nécessairement exécutées séquentiellement et dans lequel des boucles sont autorisées, plutôt qu'un jeu totalement ordonné. Les procédures ont de façon classique des attributs tels que le nom et la personne responsable associée à la procédure.

Un ouvrage (job) est le lieu de commande pour une exécution particulière d'une procédure. Dans certains contextes l'ouvrage est appelé une transaction. Les ouvrages ont des paramètres tels que l'état, l'initiateur, l'historique.

Un rôle (rôle) consiste en la désignation d'un acteur ou d'un groupe d'acteurs qui agissent comme base pour les commandes d'accès et les commandes d'exécution. Un acteur peut jouer plusieurs rôles d'acteur (Rôle Of Actor) dans une organisation. Un acteur est une personne, un programme ou une entité qui peut remplir les rôles à exécuter et être responsable de ces rôles ou être associé dans une certaine mesure avec les activités et procédure. Les attributs ou possibilités d'accès peuvent être associés avec les acteurs et avec les rôles.

Un rôle est défini par : un mot unique (rid) d'identification du rôle, le nom du rôle (name) et la description du rôle. Le rôle d'acteur comprend l'identification de l'acteur (usrid) et l'identification du rôle (rid).

D'autres paramètres ou attributs et structures peuvent être associés pour créer un modèle organisationnel, destiné à mieux gérer le flux de travail.

L'architecture au niveau du logiciel de traitement transactionnel du flux de travail constituant le système se décompose en un certain nombre de modules (30 à 37 figure 4). Les modules deviennent actifs quand un ouvrage (job) et/ou une activité (activity) est commencé ou achevé. Un module ordonnanceur (30) est activé par un message d'achèvement d'activité, une exception d'activité ou la création d'un ouvrage.

Dans tous les cas, l'ouvrage est démarré par un processus quelconque qui envoie un message du type créer un ouvrage au module ordonnanceur (30) du serveur (3). Les paramètres de ce message comportent la priorité de l'ouvrage, le temps d'expiration, le nom de la procédure et les paramètres d'initialisation.

L'ordonnanceur (30), à travers la faculté de création d'ouvrage, crée l'ouvrage, lui affecte un nombre unique, fixe l'information d'état pour cet ouvrage et effectue différentes initialisations.

Le travail de finalisation est aussi exécuté par l'ordonnanceur (30) à travers la facilité d'achèvement d'ouvrage quand toutes les activités pour un ouvrage ont été exécutées. L'ordonnanceur vérifie tous les prédécesseurs de tous les possibles successeurs d'une activité achevée.

Si l'activité achevée était une activité de décision, alors l'ordonnanceur examine la variable résultant de cette activité. Si un ou plusieurs successeurs sont validés, un message est envoyé à un module répartiteur (33) avec lequel l'ordonnanceur dialogue.

Le module ordonnanceur dialogue avec un module répartiteur (dispatcher 33) et un module signaleur (34) (notifier). L'ordonnanceur marque les nouvelles tâches qui sont crées avec l'état "todispatch" et notifie ceci au répartiteur en déposant un message dans une boite à message (35).

Le module répartiteur (33) a trois fonctions principales:
a) affecter à un utilisateur les tâches qui viennent d'être crées par l'ordonnanceur;
b) affecter un nouvel utilisateur à une tâche qui vient d'être rejetée;
c) effectuer la distribution et la circulation d'une activité parmi les utilisateurs.

Le module répartiteur (33) est le premier module qui conduit et est conduit par l'acteur et les entités de rôles. Dans sa troisième fonction, pour une activité donnée, le répartiteur (33) établit une correspondance avec un rôle et avec un ou plusieurs acteurs.

Le module signaleur (34) conserve une trace des événements rythmés et signale les receveurs corrects au moment approprié.

Deux utilitaires de rythme sont prévus dans le module signaleur (34), à savoir la faculté de rappel et la faculté de retardement. Le premier pour, par exemple, permettre d'imposer une butée limite pour l'exécution d'une activité spécifique et envoyer un message d'avertissement quand le temps de butée est expiré, tandis que le second permet de retarder l'expédition d'un message pendant une certaine période de temps pour, par exemple, demander à un acteur de faire un certain travail après un certain retard.

Le signaleur (34) reçoit également des informations du coordinateur (31) qui prend soin de ce qui se passe dans le système de gestion du flux de travail. Le coordinateur fournit les facilités de contrôle de gestion interne pour garder une trace des événements significatifs et stocker les fichiers de journal affranchis, les façons d'interroger le système sur les différents états (qui fait quoi ? quel est le degré d'avancement d'un ouvrage spécifique ? combien d'ouvrage sont en cours d'exécution ? temps moyen d'exécution d'un ouvrage, temps moyen d'exécution d'une tâche, historique des ouvrages, état courant d'un ouvrage, informations obtenues par un ouvrage déterminé, files pour exécuter une activité donnée au cours d'une procédure donnée, conflits dans un ouvrage donné, etc...) la possibilité d'agir sur l'avancement des ouvrages (suspension, remise en service (résume), annulation (cancel), réattribution (reassign) etc..) et les moyens de garder un historique par archivage.

Le répartiteur (33) et le signaleur (34) échangent des signaux avec la boite à messages (35) qui sert à conserver tous les messages asynchrones. Ces messages peuvent être des activités assignées à des acteurs, des messages d'avertissement générant chez le signaleur (34), des messages entre acteurs, etc...

Quand une requête de client est asynchrone, le résultat est mémorisé en tant que message dans la boite à messages à travers le serveur de la boite à messages. La seule façon d'accéder à la boite à messages est à travers le serveur de boite de messages (35).

La boite de messages est constituée principalement de deux tables de données d'une base de données relationnelle (371) telle que par exemple "ORACLE". La première appelée MSG-BOX-DESC qui contient la description des messages tels que un identifieur unique, le type, etc... La seconde table est appelée MSG-BOX-BROADCAST qui est utilisée pour mémoriser les destinataires des messages et les autres informations telles que les états de messages. Il est important de noter qu'un message peut être adressé à plusieurs destinataires et qu'en conséquence la deuxième table MSG-BOX-BROADCAST devrait contenir la liste des destinataires tandis que la description du message est écrite une seule fois dans la table MSG-BOX-DESC.

Le système comporte également un module de gestion des données (370) qui stocke les tables relationnelles dans la base de données telle que ORACLE pour représenter les définitions, les relations, les attributs de toutes les procédures, activités, ouvrages, rôles et acteurs.

Les modules (30 à 37) du serveur (3) communiquent à travers le système de communication, comportant les éléments (36,2,17,16) avec un module client consistant dans un ensemble de modules (10 à 15). Ces modules seront décrits dans la suite.

Le système serveur (3) communique à travers un réseau (1) et un serveur réseau (364) avec un système client (2) comportant une interface de communication (27) et une architecture à quatre couches, dont la première est le système de messages de flux de travail (26), la seconde couche (24) est constituée par différents jeux d'interface de programmes d'application client (241,242,243,244), d'une troisième couche de service (25) de gestion (251,252,253,254), et d'une quatrième couche (20,21) qui est la couche supérieure d'interface. Les différents modules d'une couche n'ont pas d'interaction entre eux.

Le système de messages de flux de travail (26) permet les échanges d'information entre les clients et le serveur.

Les informations échangées sont transportées par une structure spécifique appelée "message". Cette couche satisfait les fonctionnalités suivantes : connexion à la couche communication du serveur (364), déconnexion avec la couche communication du serveur et émission et réception de messages.

La fonction connexion permet d'établir un lien permanent avec le serveur (36). Une station de travail peut supporter une seule liaison. Pour cela, tous les messages qui sont échangés par des fonctions d'émission et de réception passent à travers ce lien.

Un message est composé d'une partie enveloppe et d'une partie donnée. La partie enveloppe contient l'émetteur, le destinataire et les informations d'état, tandis que la partie donnée contient le contenu du message, contenu qui a été explicité précédemment.

Le système de messages (26) n'a aucune connaissance au sujet du contenu du message, de l'enveloppe et encore moins des données. Ce module envoie la partie enveloppe et le nom du fichier qui contient la partie donnée à travers le lien réalisé avec le serveur, tandis que le fichier de la partie donnée est déjà sur le système de fichier partagé (372) qui est partagé avec toutes les stations de travail et le serveur.

Les interactions entre les modules sont facilitées par le sous-système de communication (27,1,36) qui autorise les échanges de messages entre les modules du système et aussi entre les utilisateurs. Ce système supporte à la fois des communications synchrones (ex : fetchtask) et des communications asynchrones (ex : sendto). Les interactions de ces communications sont mises en oeuvre par les différentes couches du protocole de communication, et le routeur (360) joue le rôle explicité précédemment entre les clients, chaque station de travail (2), et les serveurs (boite de message (35), répartiteur (33), signaleur (34), ordonnanceur (30)).

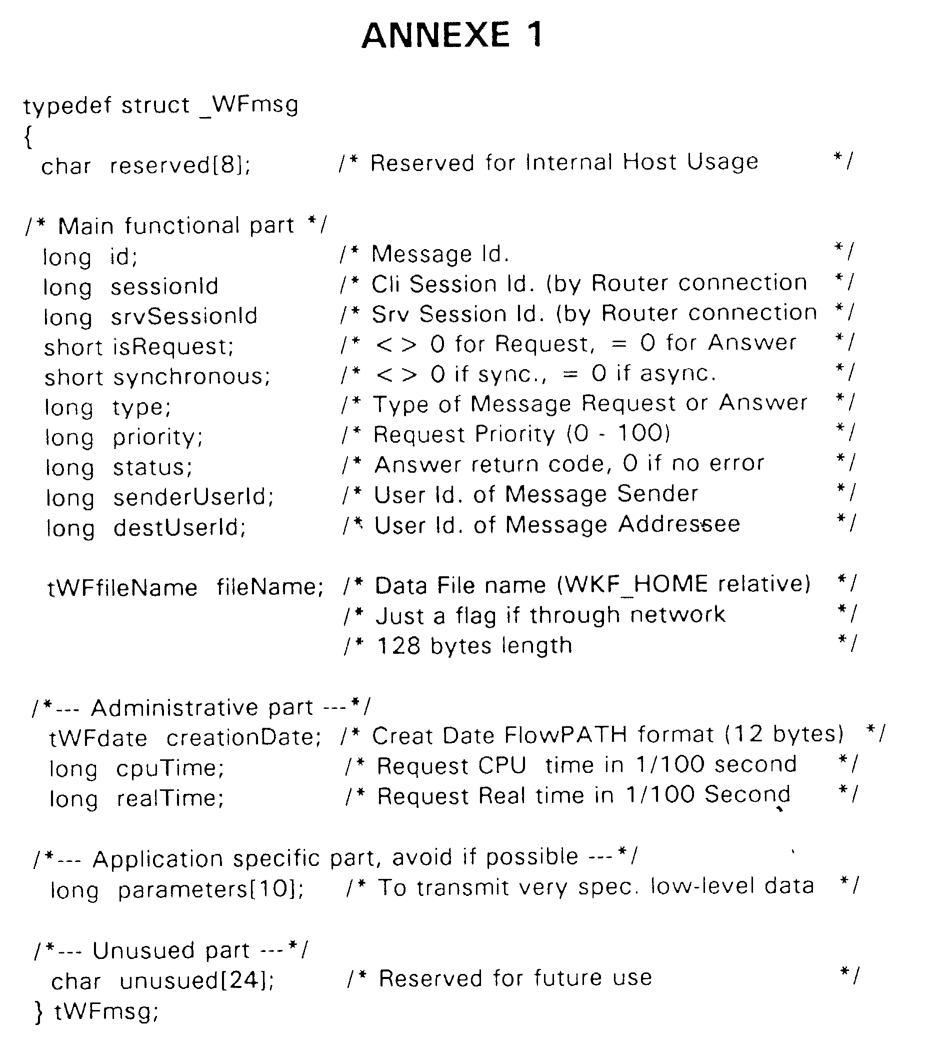

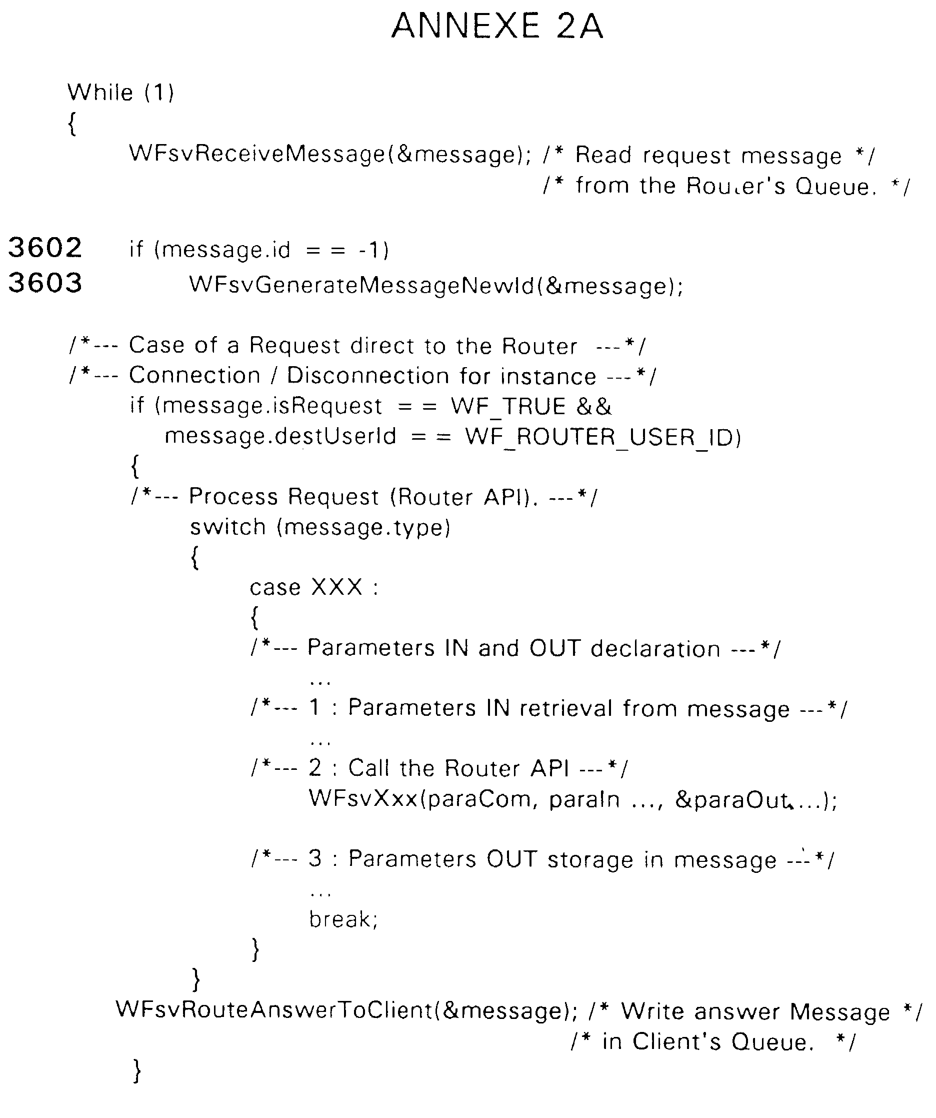

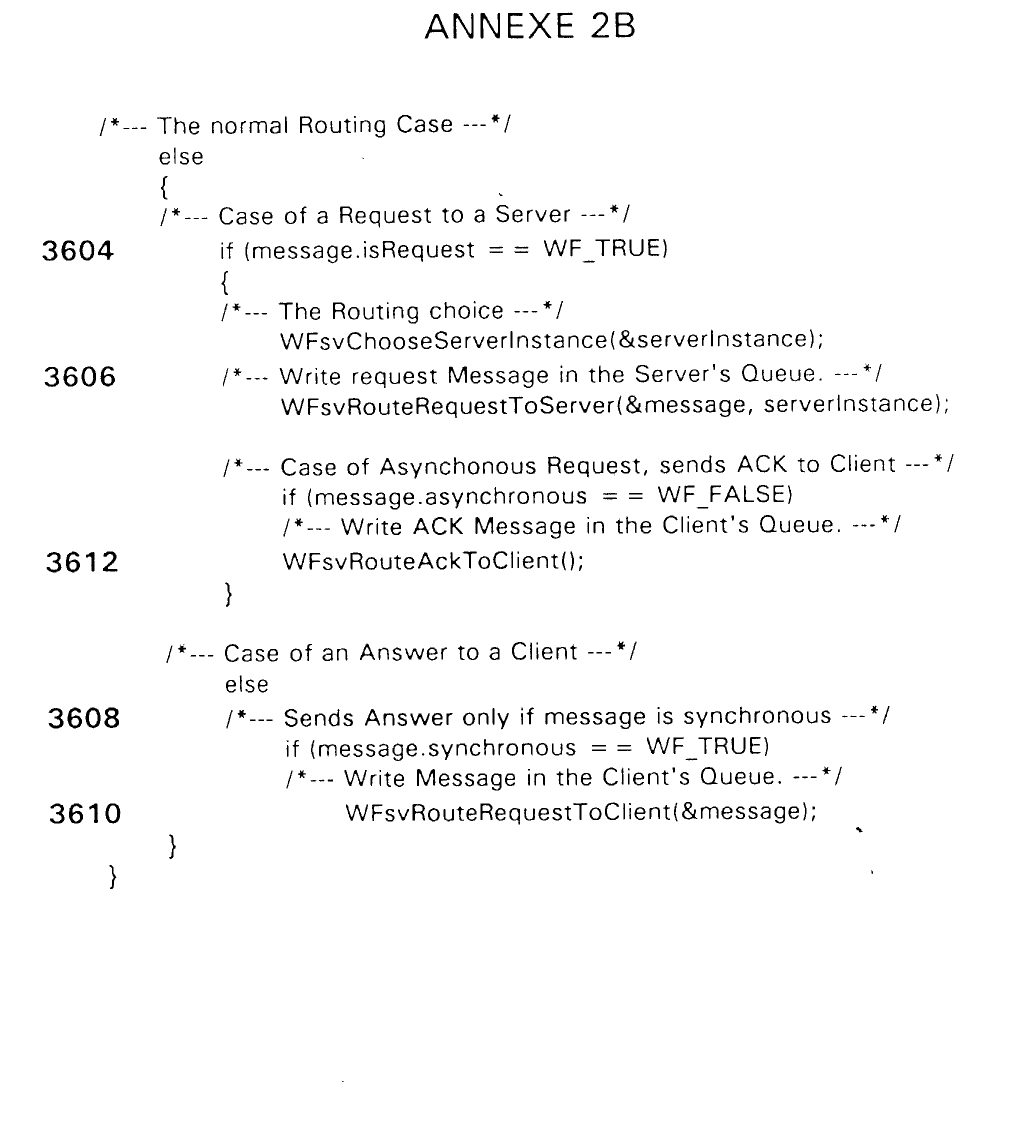

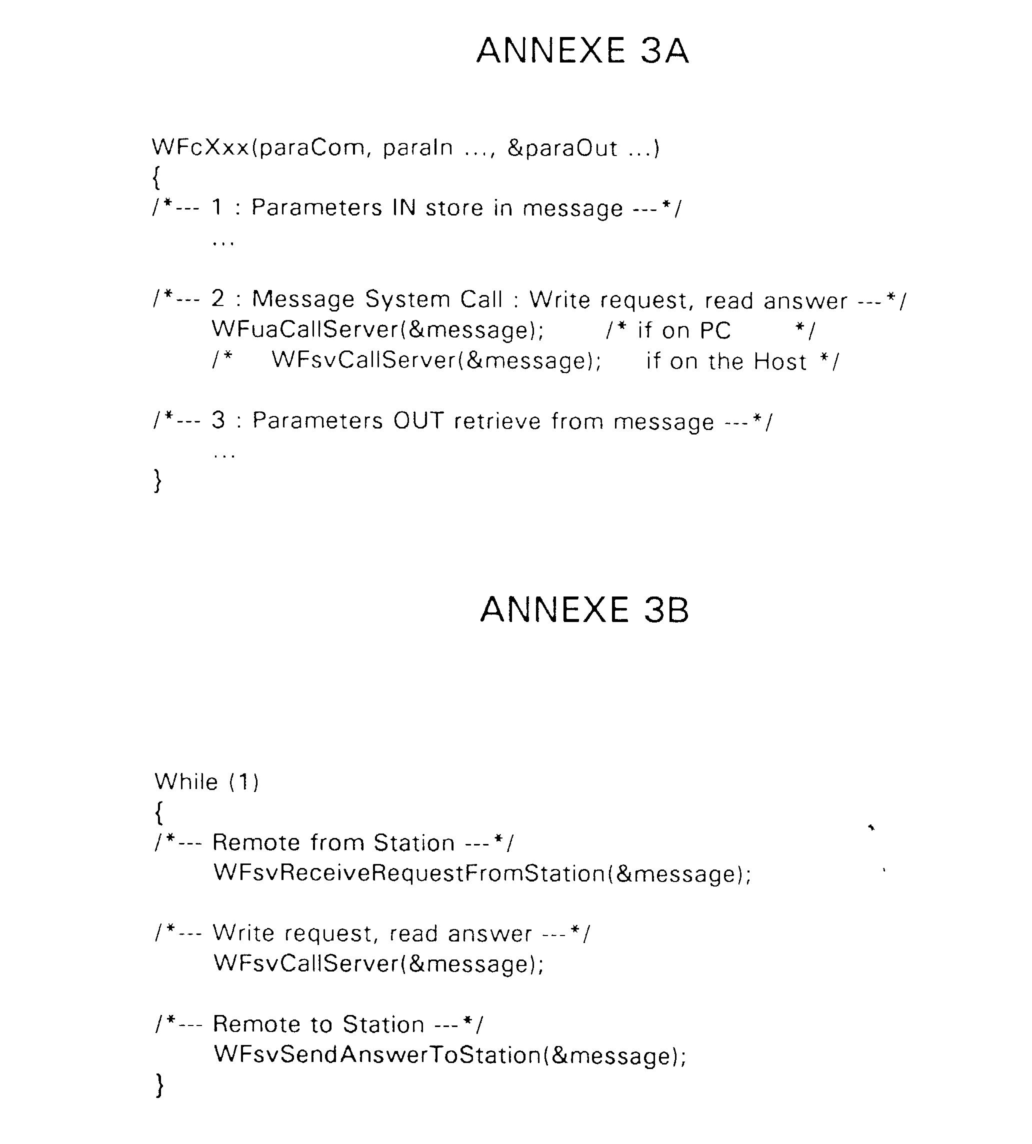

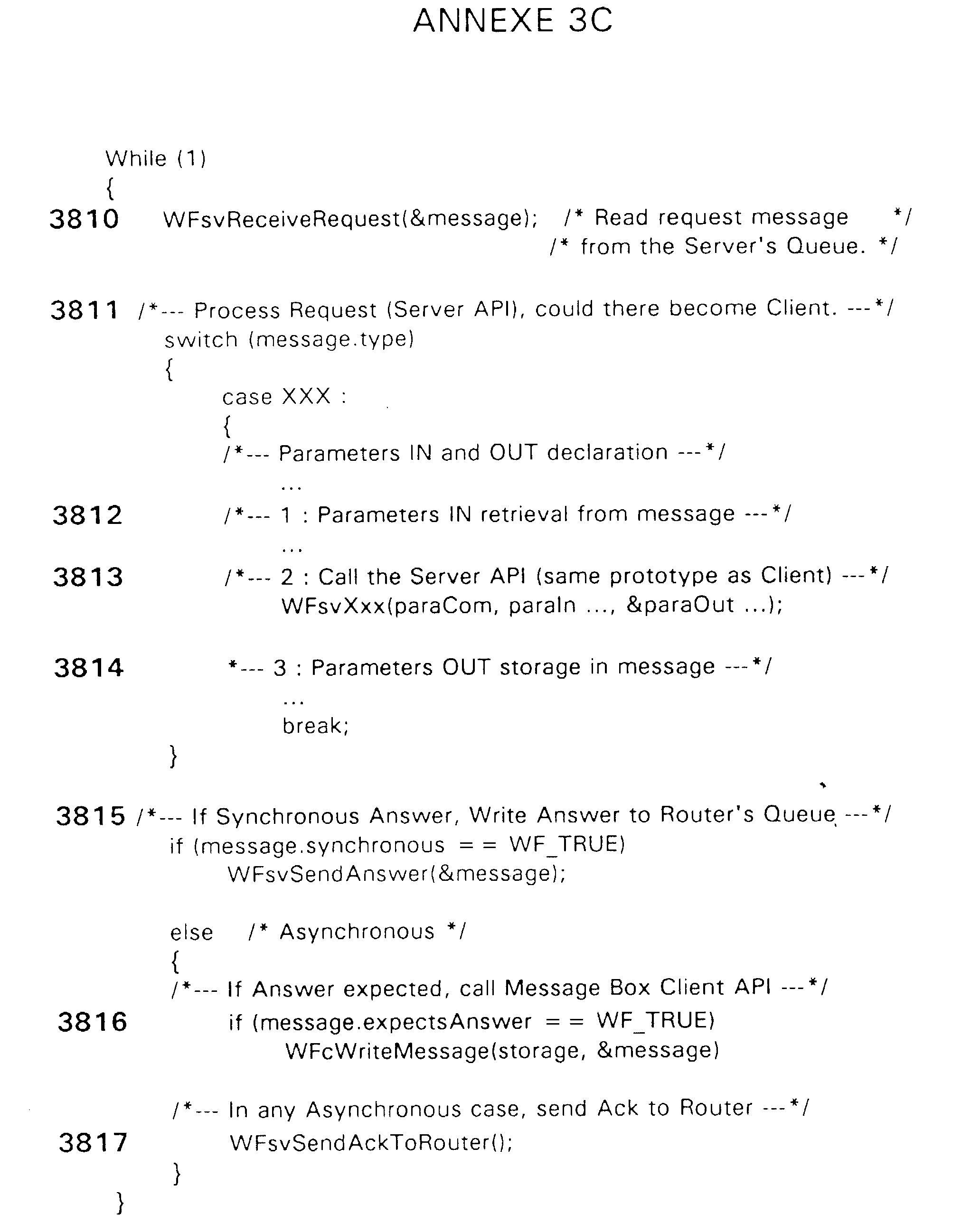

## Revendications

1. Dispositif de communication entre au moins un client et au moins un serveur qui échangent des messages caractérisé en ce qu'il comporte un routeur (360) qui aiguille les messages entre au moins un client (361,2) et au moins un serveur (381, 382,35) à l'aide de trois catégories de files d'attente de messages,
. une file d'attente (3601) attribuée au routeur (360) assurant le stockage des messages des clients ou serveurs ;
. une file d'attente (381) attribuée à chaque serveur permettant la lecture des messages de demandes formulées au serveur (38,35);
. une file d'attente (392) attribuée à chaque client (39) permettant la lecture des messages de réponse.

2. Dispositif selon la revendication 1 caractérisé en ce que le client (39) génère un identificateur de message pour le routeur.

3. Dispositif selon la revendication 1 ou 2 caractérisé en ce que le routeur (360) génère un identificateur de message pour le serveur (38,35) et le client (39).

4. Dispositif selon une des revendications 1 à 3 caractérisé en ce que le serveur (38,35) génère un identificateur de message pour le routeur (360).

5. Dispositif selon la revendication 1 ou 4 caractérisé en ce que le message comporte un champ de deux octets indiquant si la communication est synchrone ou asynchrone et un champ de deux octets pour indiquer si le message est une réponse ou une demande en donnant respectivement à ce champ la valeur zéro ou une valeur différente de zéro.

6. Dispositif selon la revendication 5 caractérisé en ce que le message comporte un champ de quatre octets d'identification de l'utilisateur émetteur du message.

7. Dispositif selon la revendication 5 caractérisé en ce que le message comporte un champ de quatre octets d'identification du destinataire du message.

8. Procédé de traitement de requêtes synchrones entre au moins un client et au moins un serveur dialoguant à travers un dispositif routeur selon une des revendications précédentes, caractérisé en ce qu'il comporte les étapes suivantes :
. le client (39) envoie un message de requête à la file d'attente (3601) du routeur ;
. le routeur (360) envoie à la file d'attente (351,381) du serveur (35,38) un message avec un identificateur ;
. après réception de la réponse dans sa file, le routeur (360) envoie un message d'acquittement au client (39) avec un identificateur lui permettant de retrouver la réponse dans la file d'attente (3601) du routeur (360).

9. Procédé selon la revendication 8 caractérisé en ce que le client (39) est lui-même un serveur.

10. Procédé selon la revendication 8 caractérisé en ce que le serveur est un client d'un autre serveur dans un procédé synchrone ou asynchrone.

11. Procédé de traitement des requêtes asynchrones entre au moins un client et un serveur dialoguant à travers un dispositif routeur selon une des revendications 1 à 7, caractérisé en ce qu'il comporte les étapes suivantes :
. le client (39) envoie un message de requête à la file d'attente (3601) du routeur avec un premier identificateur ;
. le routeur (360) envoie à la file d'attente (351,381) du serveur (35,38) un message avec un second identificateur, accuse réception au client (39) du message de requête et le serveur (35,38) accuse réception au routeur (360) en envoyant à la file d'attente (3601) du routeur (360) le second identificateur ;
. le serveur envoie à la file d'attente (3601) du routeur un message avec le second identificateur lorsqu'il a élaboré la réponse,

12. Procédé selon la revendication 11 caractérisé en ce que lorsque le serveur (38,35) a envoyé un identificateur, et le message de réponse à la file d'attente (3601) du routeur (360), le routeur envoie le message à la file d'attente (351) du serveur (35) de boite de message qui acquitte le routeur (360), lequel acquitte le serveur (381).

13. Procédé selon la revendication 11 ou 12 caractérisé en ce que le client récupère la réponse en envoyant un message (fetch-message) de demande à la file d'attente (3601) du routeur, qui transmet ce message à la file d'attente du serveur (35) de la boite de message, le serveur (35) de la boite de message envoyant la réponse à la file d'attente du routeur qui retransmet le message au client.

14. Procédé selon une des revendications 11 à 13 caractérisé en ce que le client (39) envoie un message de requête à la file d'attente (3601) du routeur (360), ce dernier compare la valeur de l'identificateur de message à la valeur "-1" pour soit calculer un nouvel identificateur de message qui servira dans les autres étapes si la valeur est "-1", soit retransmettre l'identifieur reçu si la valeur est différente de "-1".

15. Procédé selon la revendication 8, 11 ou 14 caractérisé en ce que le message comporte un champ de deux octets indiquant si la communication est synchrone ou asynchrone et un champ de deux octets pour indiquer si le message est une réponse ou une demande.

16. Procédé selon la revendication 15 caractérisé en ce que le message comporte un champ de quatre octets pour identification de l'émetteur du message.

17. Procédé selon la revendication 15 caractérisé en ce que le message comporte un champ de quatre octets d'identification du destinataire du message.

## Patentansprüche

1. Vorrichtung zur Kommunikation zwischen wenigstens einem Client und wenigstens einem Server, die Nachrichten austauschen, dadurch gekennzeichnet, daß sie einen Router (360) enthält, der die Nachrichten zwischen wenigstens einem Client (361, 2) und wenigstens einem Server (381, 382, 35) mit Hilfe dreier Kategorien von Nachrichten-Warteschlangen leitet,
- einer dem Router (360) zugewiesene Warteschlange (3601), die die Speicherung der Nachrichten von den Clients oder den Servern sicherstellt;
- einer jedem Server zugewiesenen Warteschlange (381), die das Lesen der Nachrichten formulierter Anforderungen an den Server (38, 35) ermöglicht;
- einer jedem Client (39) zugewiesenen Warteschlange (392), die das Lesen von Antwortnachrichten ermöglicht.

2. Vorrichtung nach Anspruch 1, dadurch gekennzeichnet, daß der Client (39) einen Nachrichtenidentifizierer für den Router erzeugt.

3. Vorrichtung nach Anspruch 1 oder 2, dadurch gekennzeichnet, daß der Router (360) einen Nachrichtenidentifizierer für den Server (38, 35) und den Client (39) erzeugt.

4. Vorrichtung nach einem der Ansprüche 1 bis 3, dadurch gekennzeichnet, daß der Server (38, 35) einen Nachrichtenidentifizierer für den Router (360) erzeugt.

5. Vorrichtung nach Anspruch 1 oder 4, dadurch gekennzeichnet, daß die Nachricht ein Feld aus zwei Bytes, die angeben, ob die Kommunikation synchron oder asynchron ist, sowie ein Feld aus zwei Bytes enthält, die angeben, ob die Nachricht eine Antwort oder eine Anforderung ist, indem diesem Feld der Wert Null bzw. ein von Null verschiedener Wert gegeben wird.

6. Vorrichtung nach Anspruch 5, dadurch gekennzeichnet, daß die Nachricht ein Feld aus vier Bytes zur Identifizierung des die Nachricht sendenden Anwenders enthält.

7. Vorrichtung nach Anspruch 5, dadurch gekennzeichnet, daß die Nachricht ein Feld aus vier Bytes zur Identifizierung des Nachrichtenempfängers enthält.

8. Verfahren zum Verarbeiten von synchronen Anforderungen zwischen wenigstens einem Client und wenigstens einem Server, die über eine Router-Vorrichtung nach irgendeinem der vorangehenden Ansprüche einen Dialog führen, dadurch gekennzeichnet, daß es die folgenden Schritte enthält:
- der Client (39) schickt zur Warteschlange (3601) des Routers eine Anforderungsnachricht;
- der Router (360) schickt zur Warteschlange (351, 381) des Servers (35, 38) eine Nachricht mit einem Identifizierer;
- nach dem Empfang der Antwort in seiner Schlange schickt der Router (360) an den Client (39) eine Quittierungsnachricht mit einem Identifizierer, der ihm ermöglicht, die Antwort in der Warteschlange (3601) des Routers (360) wiederzufinden.

9. Verfahren nach Anspruch 8, dadurch gekennzeichnet, daß der Client (39) selbst ein Server ist.

10. Verfahren nach Anspruch 8, dadurch gekennzeichnet, daß der Server ein Client eines weiteren Servers in einem synchronen oder asynchronen Verfahren ist.

11. Verfahren zur Verarbeitung von asynchronen Anforderungen zwischen wenigstens einem Client und einem Server, die über eine Router-Vorrichtung nach einem der Ansprüche 1 bis 7 einen Dialog führen, dadurch gekennzeichnet, daß es die folgenden Schritte enthält:
- der Client (39) schickt zur Warteschlange (3601) des Routers eine Anforderungsnachricht zusammen mit einem ersten Identifizierer;
- der Router (360) schickt zur Warteschlange (351, 381) des Servers (35, 38) eine Nachricht mit einem zweiten Identifizierer und bestätigt dem Client (39) den Empfang der Anforderungsnachricht, während der Server (35, 38) dem Router den Empfang bestätigt, indem er zur Warteschlange (3601) des Routers (360) den zweiten Identifizierer schickt;
- der Server schickt zur Warteschlange (3601) des Routers eine Nachricht zusammen mit dem zweiten Identifizierer, wenn er die Antwort ausarbeitet.

12. Verfahren nach Anspruch 11, dadurch gekennzeichnet, daß der Router (360) dann, wenn der Server (38, 35) einen Identifizierer und die Antwortnachricht zur Warteschlange (3601) des Routers geschickt hat, die Nachricht zur Warteschlange (351) des Nachrichtenkasten-Servers (35) schickt, der dem Router (360) quittiert, der seinerseits dem Server (381) quittiert.

13. Verfahren nach Anspruch 11 oder 12, dadurch gekennzeichnet, daß der Client die Antwort wiedergewinnt, in dem er eine Anforderungsnachricht (fetch-message) zur Warteschlange (3601) der Routers schickt, der diese Nachricht zur Warteschlange des Nachrichtenkasten-Servers (35) sendet, wobei der Nachrichtenkasten-Server (35) die Antwort zur Warteschlange des Routers schickt, der die Nachricht zum Client zurücksendet.

14. Verfahren nach einem der Ansprüche 11 bis 13, dadurch gekennzeichnet, daß der Client (39) eine Anforderungsnachricht zur Warteschlange (3601) des Routers (360) schickt, wobei dieser letztere den Wert des Identifizierers der Nachricht mit dem Wert "-1" vergleicht, um entweder einen neuen Identifizierer der Nachricht zu berechnen, der in den weiteren Stufen verwendet wird, falls der Wert "-1" ist, oder um den empfangenen Identifizierer zurückzusenden, falls der Wert verschieden von "-1" ist.

15. Verfahren nach Anspruch 8, 11 oder 14, dadurch gekennzeichnet, daß die Nachricht ein Feld aus zwei Bytes, die angeben, ob die Kommunikation synchron oder asynchron ist, sowie ein Feld aus zwei Bytes enthält, die angeben ob die Nachricht eine Antwort oder eine Anforderung ist.

16. Verfahren nach Anspruch 15, dadurch gekennzeichnet, daß die Nachricht ein Feld aus vier Bytes zur Identifizierung des Senders der Nachricht enthält.

17. Verfahren nach Anspruch 15, dadurch gekennzeichnet, daß die Nachricht ein Feld aus vier Bytes zur Identifizierung des Empfängers der Nachricht enthält.

## Claims

1. Communication device between at least one client and at least one server which exchange messages, characterised in that it comprises a router (360) that routes the messages between at least one client (361, 2) and at least one server (381, 382, 25) using three categories of message queues,
- a queue (3601) allocated to the router (360) that stores the messages from clients or servers;
- a queue (381) allocated to each server, allowing the request messages addressed to the server (38, 35) to be read;
- a queue (392) allocated to each client (39) allowing the answer messages to be read.

2. Device according to claim 1 characterised in that the client (39) generates a message identifier for the router.

3. Device according to claim 1 or 2 characterised in that the router (360) generates a message identifier for the server (38, 35) and the client (39).

4. Device according to one of claims 1 to 3 characterised in that the server (38, 35) generates a message identifier for the router (360).

5. Device according to claim 1 or 4 characterised in that the message comprises a two-byte field indicating whether the communication is synchronous or asynchronous and a two-byte field for indicating whether the message is an answer or a request and giving this field respectively the value zero or a value different from zero.

6. Device according to claim 5 characterised in that the message comprises a four-byte field identifying the user that has sent the message.

7. Device according to claim 5 characterised in that the message comprises a four-byte field identifying the addressee of the message.

8. Method for processing synchronous requests between at least one client and at least one server conducting a dialogue across a routing device according to one of the preceding claims, characterised in that it comprises the following steps;
- the client (39) sends a request message to the queue (3601) of the router;
- the router (360) sends to the queue (351, 381) of the server (35, 38) a message with an identifier;
- after receiving the answer in its queue, the router (360) sends an acknowledgment message to the client (39) with an identifier allowing it to find the answer in the queue (3601) of the router (360).

9. Method according to claim 8 characterised in that the client (39) is itself a server.

10. Method according to claim 8 characterised in that the server is a client of another server in a synchronous or asynchronous method.

11. Method of processing asynchronous requests between at least one client and one server conducting a dialogue across a routing device according to one of claims 1 to 7, characterised in that it comprises the following steps;
- the client (39) sends a request message to the queue (3601) of the router with a first identifier;
- the router (360) sends to the queue (351, 381) of the server (35, 38) a message with a second identifier, acknowledges receipt to the client (39) of the request message and the server (35, 38) acknowledges receipt to the router (360) by sending to the queue (3601) of the router (360) the second identifier;
- the server sends to the queue (3601) of the router a message with the second identifier when it has prepared the answer.

12. Method according to claim 11 characterised in that when the server (38, 35) has sent an identifier and the answer message to the queue (3601) of the router (360), the router sends the message to the queue (351) of the message box server (35), which acknowledges the router (360), which acknowledges the server (381).

13. Method according to claim 11 or 12 characterised in that the client retrieves the answer by sending a request message (fetch-message) to the queue (3601) of the router, which transmits this message to the queue of the server (35) of the message box, the server (35) of the message box sending the answer to the queue of the router, which retransmits the message to the client.

14. Method according to one of claims 11 to 13 characterised in that the client (39) sends a request message to the queue (3601) of the router (360), the latter compares the value of the message identifier with the value "-1", either to calculate a new message identifier to be used in the other stages if the value is "-1", or to retransmit the identifier received if the value is different from "-1".

15. Method according to claim 8, 11 or 14 characterised in that the message comprises a two-byte field indicating whether the communication is synchronous or asynchronous and a two-byte field for indicating whether the message is an answer or a request.

16. Method according to claim 15 characterised in that the message comprises a four-byte field for identifying the message sender.

17. Method according to claim 15 characterised in that the message comprises a four-byte field identifying the message addressee.
